# EUROPÄISCHE PATENTSCHRIFT

(11) **EP 3 533 314 B1**
(45) Veröffentlichungstag und Bekanntmachung des Hinweises auf die Patenterteilung: **02.12.2020**
(21) Anmeldenummer: 18211556.8
(22) Anmeldetag: 11.12.2018
(51) Int. Cl.: A01D 41/12, A01D 41/127

(54) **SELBSTFAHRENDE ERNTEMASCHINE UND BETRIEBSVERFAHREN DAFÜR**
SELF-DRIVING HARVESTER AND METHOD OF OPERATING SAME
MOISSONNEUSE AUTOMOTRICE ET SON PROCÉDÉ DE FONCTIONNEMENT

(30) Priorität: 28.02.2018 DE 102018001551
(43) Veröffentlichungstag der Anmeldung: 04.09.2019
(73) Patentinhaber: CLAAS Selbstfahrende Erntemaschinen GmbH, 33428 Harsewinkel (DE)
(72) Erfinder: Bultmann, Hubertus, 92449 Steiberg am See (DE)

(56) Entgegenhaltungen:
- EP-A1- 1 616 470
- EP-A1- 2 060 165
- EP-A1- 2 936 961
- DE-U1- 20 001 144
- US-A1- 2005 088 643

## Beschreibung

Die vorliegende Erfindung betrifft eine selbstfahrende Erntemaschine, die wenigstens einen Teil des beim Abernten einer Feldfläche aufgenommenen Ernteguts nach der Verarbeitung wieder auf die Fläche ausbringt. Typischerweise handelt es sich bei einer solchen Erntemaschine um einen Mähdrescher, der nach dem Dreschen und Abscheiden des Kornanteils verbleibende Halm- und Ährenbruchstücke wieder auf dem Feld verstreut.

EP 2 220 926 B1 beschreibt einen Mähdrescher, bei dem diverse Arbeitsparameter wie etwa Drehzahlen von Dreschtrommel und Reinigungsgebläse, Siebweiten, Fahrgeschwindigkeit, etc., automatisch angepasst werden, um eine optimale Effizienz des Erntevorgangs zu erreichen, d.h. um einen Kompromiss zwischen erzielter Reinheit des Korns, Kornverlusten und aufgewandten Ressourcen zu finden, der dem Landwirt den optimalen wirtschaftlichen Ertrag bietet. Gegenstand dieser Optimierung ist unter anderem die Fahrgeschwindigkeit des Mähdreschers, denn sie bestimmt, wie viel Erntegut pro Zeiteinheit aufgenommen wird und verarbeitet werden muss. Eine hohe Geschwindigkeit führt zwar zu niedrigen Arbeits- und Maschinenkosten, führt aber tendenziell auch zu höheren Kornverlusten und somit zu einer Minderung des Feldertrags; eine aufgrund des hohen Durchsatzes verminderte Trennschärfe führt zu einem erhöhten Verunreinigungsanteil im geernteten Korn und beeinträchtigt dessen Verkaufswert.

Aus DE 10 2014 005 904 A1 ist ein Mähdrescher bekannt, der mit Hilfe einer Kamera in der Lage ist, eine Bestandskante zu erfassen und einen Erntevorsatz exakt an der Innenseite dieser Bestandskante entlang zu bewegen, um so den Bestand auf einem entlang der Bestandskante verlaufenden Feldstreifen abzuernten, und der ausgedroschenes Stroh auf den unmittelbar zuvor abgeernteten Feldstreifen auszuwirft. Wenn dieser Mähdrescher am Vorgelege auf eine zu seiner Fahrtrichtung senkrechte Bestandskante stößt, muss er diese passieren, um außerhalb des Bestandes, meist auf einer bereits abgeernteten und dabei mit Stroh bestreuten Feldfläche, zu wenden und anschließend wieder in den Bestand einzufahren und einen weiteren Streifen abzuernten. Wenn sich beim Herausfahren aus dem Bestand noch Stroh im Inneren des Mähdreschers befindet, wird dieses typischerweise im Vorgelege ausgeworfen und bildet dort eine zweite Schicht auf der bereits vorhandenen Strohschicht. Umgekehrt kann der Fall auftreten, dass, wenn der Mähdrescher sich beim Verlassen des Bestandes langsam bewegt, Stroh, das unmittelbar vor Erreichen der Bestandskante aufgenommen wurde, den Mähdrescher bereits wieder verlassen hat, bevor dessen Heck die Bestandskante erreicht, sodass unmittelbar vor der Bestandskante ein Stück Feldfläche unbestreut bleibt.

Eine gleichmäßige Strohverteilung ist jedoch wichtig für einen hohen Ertrag der auf dem betreffenden Feld anschließend angebauten Feldfrucht, insbesondere eine hohe Strohdichte auf doppelt bestreuten Flächen kann zu Ertragseinbußen führen.

Aufgabe der vorliegenden Erfindung ist es, eine selbstfahrende Erntemaschine sowie ein Betriebsverfahren dafür anzugeben, die es erlauben, eine gleichmäßige Verteilung von wieder ausgeworfenem Erntegut mit einer hohen Effizienz des Erntevorgangs zu kombinieren.

Die Aufgabe wird gelöst, indem bei einer selbstfahrenden, wenigstens einen Teil von aufgenommenem Erntegut nach dessen Verarbeitung wieder auswerfenden Erntemaschine mit einer Steuereinheit, die anhand von Sensordaten wenigstens die Fahrgeschwindigkeit der Erntemaschine steuert, die Steuereinheit an ein Instrument zum Erkennen einer Bestandskante gekoppelt und eingerichtet ist, um beim Passieren einer Bestandskante in wenigstens eine Richtung die Fahrgeschwindigkeit der Erntemaschine zum Zeitpunkt des Passierens der Bestandskante an eine Durchlaufgeschwindigkeit von Erntegut durch die Erntemaschine anzupassen. Durch eine solche Anpassung kann erreicht werden, dass trotz einer endlichen Verweildauer des wieder auszuwerfenden Ernteguts in der Erntemaschine das Erntegut an genau der Stelle wieder ausgeworfen wird, an der es zuvor aufgenommen wurde. Wenn die Erntemaschine über eine solche Bestandskante den Bestand verlässt, dann ist zu dem Zeitpunkt, an dem sie den Bestand vollständig verlassen hat, auch das Innere der Erntemaschine frei von auszuwerfendem Erntegut, sodass ein erneutes Bestreuen des Vorgeleges, welches die Erntemaschine nach Passieren der Bestandskante erreicht, vermieden wird.

Die Durchlaufgeschwindigkeit des Ernteguts sollte definiert sein durch den Abstand in Fahrtrichtung zwischen einer Erntegut aufnehmenden Schneidkante und einer Auswurföffnung der Erntemaschine, dividiert durch die mittlere Verweildauer des auszuwerfenden Ernteguts in der Erntemaschine.

Da diese Verweildauer nur schwerlich in Echtzeit messbar ist, sollte die Steuereinheit eingerichtet sein, die Durchlaufgeschwindigkeit anhand der Geschwindigkeit wenigstens eines das Erntegut verarbeitenden Arbeitsorgans der Erntemaschine abzuschätzen. Als Arbeitsorgane kommen hier insbesondere eine Dreschtrommel, ein Reinigungsgebläse, ein schwingend bewegter Hordenschüttler, etc. in Betracht.

Im Interesse eines effizienten Betriebes sollte es möglich sein, beim Fahren im Bestand die Geschwindigkeit des Arbeitsorgans anhand von Merkmalen des Bestands wie insbesondere der Art des Ernteguts, der Bestandsdichte und des Feuchtigkeitsgehalts des Ernteguts zu regeln. Diese Regelung hat auch einen Einfluss auf die Durchlaufgeschwindigkeit des auszuwerfenden Ernteguts bzw. auf dessen Verweildauer in der Erntemaschine. Während es für einen menschlichen Fahrer schwierig ist, diese Verweildauer exakt abzuschätzen und beim Herausfahren aus dem Bestand zu berücksichtigen, ist es für eine elektronische Steuereinheit kein Problem, anhand dieser Daten, zum Beispiel mit Hilfe einer gespeicherten Kennlinie, die Verweildauer in Echtzeit abzuschätzen und bei der Festlegung der Geschwindigkeit, mit der aus dem Bestand herausgefahren wird, zu berücksichtigen.

Merkmale des Bestandes, insbesondere die im vorhergehenden Absatz erwähnten, sollten auch bei der Festlegung der Fahrgeschwindigkeit berücksichtigt werden, um während des Fahrens im Bestand, wenn eine demnächst zu überquerende Bestandskante noch nicht bei der Festlegung der Fahrgeschwindigkeit berücksichtigt wird, einen wirtschaftlichen Kompromiss zwischen der Auslastung der Arbeitsorgane des Mähdreschers und der Qualität der Verarbeitung durch den Mähdrescher zu finden, wobei Parameter für die Beurteilung der Verarbeitungsqualität zum Beispiel die Reinheit und/oder der Bruchkornanteile des abgeschiedenen Korns, oder Verlust durch im ausgeworfenen Erntegut enthaltenes Korn sein können.

Die Steuereinheit sollte eingerichtet sein, um eine Differenz zwischen der Fahrgeschwindigkeit und der Durchlaufgeschwindigkeit zu erfassen und diese vor Erreichen der Bestandskante allmählich zu reduzieren, vorzugsweise so, dass beim Passieren der Bestandskante die Fahrgeschwindigkeit und die Durchlaufgeschwindigkeit im Rahmen der Erfassungsgenauigkeit gleich sind.

Wenn die Erntemaschine sich außerhalb des Bestands bewegt, wird kein Erntegut neu aufgenommen, sodass sich auch kein Erntegut in der Maschine befindet, anhand dessen die Geschwindigkeiten der Arbeitsorgane optimiert werden könnten. Eine automatische Optimierung dieser Geschwindigkeiten sollte daher während des Fahrens außerhalb des Bestandes gesperrt sein, sodass zumindest zum Zeitpunkt des Wiedereintritts in den Bestand die Arbeitswerkzeuge mit den gleichen Geschwindigkeiten arbeiten wie zur Zeit des Herausfahrens.

Um zum Zeitpunkt des Wiedereintritts in den Bestand Verarbeitungsbedingungen in der Erntemaschine herzustellen, die denen zum Zeitpunkt des Herausfahrens möglichst exakt gleichen, sollte die Steuereinheit ferner eingerichtet sein, um beim Wiedereinfahren in den Bestand die beim vorherigen Herausfahren aus dem Bestand innegehabte Fahrgeschwindigkeit wieder einzustellen, ungeachtet der Tatsache, dass beim Wenden außerhalb des Bestands die Geschwindigkeit der Erntemaschine stark von diesem Wert abweichen und eventuell zeitweilig sogar negativ werden kann.

Um eine rechtzeitige Anpassung der Fahrgeschwindigkeit der Erntemaschine an ein bevorstehendes Passieren einer Bestandskante auch bei eingeschränkter Sicht auf die Bestandskante zu ermöglichen, sollte das Instrument zum Erkennen einer Bestandskante einen Empfänger für ein Satellitennavigationssignal umfassen.

Um die Entfernung zu einer demnächst zu passierenden Bestandskante oder die Zeit bis zu deren Erreichen beurteilen zu können, sollte das Instrument ferner eine gespeicherte Karte des Bestands umfassen.

Eine solche Karte sollte während des Erntens des Bestands aktualisierbar sein, um der sich durch das Abernten ergebenden fortwährenden Verlagerung der Bestandskante Rechnung tragen zu können.

Die Aufgabe wird ferner gelöst durch ein Verfahren zum Betreiben einer selbstfahrenden, wenigstens einen Teil von aufgenommenem Erntegut nach Verarbeitung wieder auswerfenden Erntemaschine mit den Schritten:
a) Abschätzen einer Durchlaufgeschwindigkeit von Erntegut durch die Erntemaschine,
b) beim Passieren einer Bestandskante in wenigstens einer Richtung Anpassen der Fahrgeschwindigkeit der Erntemaschine zum Zeitpunkt des Passierens der Bestandskante an die Durchlaufgeschwindigkeit.

Wenn die Erntemaschine die Bestandskante in der Richtung vom Bestand ins Vorgewende passiert, ist in der Erntemaschine Erntegut enthalten, das kurz vor Erreichen der Bestandskante aufgenommen wurde und an dem zumindest theoretisch die Durchlaufgeschwindigkeit gemessen werden könnte. Beim Passieren der Bestandskante in Gegenrichtung, vom Vorgewende in den Bestand, ist in der Regel kein auszuwerfendes Erntegut mehr in der Maschine vorhanden; dennoch kann auch hier eine Durchlaufgeschwindigkeit definiert werden als die Geschwindigkeit, mit der Erntegut, wenn es sich während des Passierens der Bestandskante im Mähdrescher befände, diesen in Anbetracht der gegebenen Geschwindigkeiten seiner Arbeitsorgane durchlaufen würde.

Wenn die Durchlaufgeschwindigkeit des Ernteguts durch die Maschine niedriger als die Fahrgeschwindigkeit ist, dann beinhaltet die Anpassung eine Herabsetzung der Fahrgeschwindigkeit vor Erreichen der Bestandskante. Umgekehrt kann jedoch, wenn die Durchlaufgeschwindigkeit höher als die Fahrgeschwindigkeit ist, vor Erreichen der Bestandskante eine Heraufsetzung der Fahrgeschwindigkeit nötig sein, wobei diese unmittelbar nach Verlassen des Bestandes, um ein Wendemanöver zu ermöglichen, wieder herabgesetzt werden sollte.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Mähdreschers als Beispiel einer Erntemaschine, an der die Erfindung anwendbar ist;
- Fig. 2: eine Kartenansicht eines Feldes mit einem Mähdrescher kurz vor bzw. beim Ausfahren aus dem Bestand;
- Fig. 3: eine zu Fig. 2 analoge Ansicht, die den Mähdrescher nach Wiedereintritt in den Bestand zeigt; und
- Fig. 4: ein Flussdiagramm eines von einer Steuereinheit des Mähdreschers ausgeführten Arbeitsverfahrens.

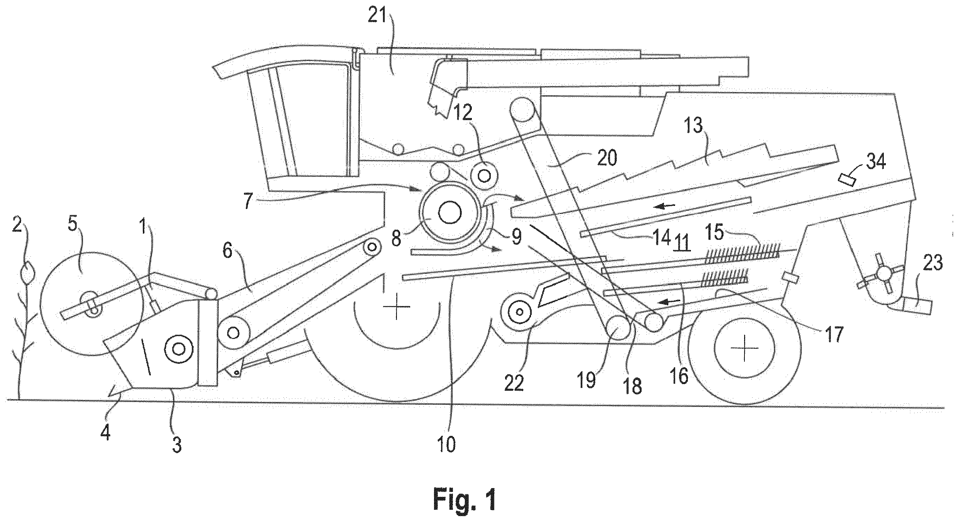

Der in Fig. 1 schematisch dargestellte Mähdrescher trägt an seiner Vorderseite ein austauschbares Schneidwerk, zum Beispiel ein Getreideschneidwerk 1 zum Schneiden und Sammeln von Erntegut 2. Das Schneidwerk 1 umfasst eine Bodenplatte 3, an deren Vorderkante Messer 4 zum Kappen der Halme des Ernteguts 2 quer zur Fahrtrichtung beweglich sind. Über der Vorderkante ist ein Rotor 5 angeordnet, um die gekappten Halme des Ernteguts 2 zu raffen und auf die Bodenplatte 3 zu schieben. Ein Schrägförderer 6 befördert das geschnittene Erntegut zu einem Dreschwerk 7, das hier eine mit quer zur Fahrtrichtung des Mähdreschers ausgerichteter Achse angeordnete Dreschtrommel und einen Dreschkorb 9 umfasst. Im Dreschwerk 7 aus dem Erntegut ausgedroschenes Korn passiert den Dreschkorb 9 und gelangt über einen Vorbereitungsboden 10 zu einer Siebanordnung 11.

Die Anteile des Ernteguts, die im Dreschwerk 7 den Dreschkorb 9 nicht passiert haben, werden über eine Wendetrommel 12 zu einer Abscheideeinrichtung 13 gefördert, hier dargestellt als ein Strohschüttler, die restliches Korn sowie kleinteiliges Nichtkornmaterial aus dem Strom des gedroschenen Ernteguts isoliert. Anstelle des Strohschüttlers kann als Abscheideeinrichtung 13 auch ein Axialabscheider, zum Beispiel mit einer oder zwei sich in Längsrichtung des Mähdreschers erstreckenden Trommeln, umgeben von Abscheidekörben, vorgesehen sein.

Erntegut, welches durch Roste der Abscheideeinrichtung 13 hindurchgefallen ist, gelangt auf einen sich unter der Abscheideeinrichtung 13 erstreckenden, nach vorn abschüssigen Rücklaufboden 14 und über diesen zum Vorbereitungsboden 10, wo es sich mit dem durch den Dreschkorb 9 hindurchgetretenen Korn mischt. Der dadurch erhaltene Gutstrom, der reich an Korn ist, aber auch fein zerkleinerte Nichtkornbestandteile enthält, wird weiterbefördert auf ein Obersieb 15 der Siebanordnung 11.

Das Obersieb 15 und ein darunterliegendes, zu dem Obersieb 15 in etwa paralleles Untersieb 16 sind unten und seitlich von einem Siebgehäuse umschlossen. Der in Fig. 1 gezeigte Boden 17 des Siebgehäuses ist von einem an eine hintere Wand des Untersiebs 16 angrenzenden Rand aus nach vorn zu einer Schneckenmulde 18 hin abschüssig, in welcher eine Förderschnecke 19 rotiert. Die Förderschnecke 19 und ein daran angeschlossener Kornelevator 20 befördern von Nichtkornbestandteilen gereinigtes Korn, das sich auf dem Boden 17 sammelt, in einen Korntank 21 hinter der Führerkanzel des Mähdreschers.

Die Siebanordnung 11 und ein Reinigungsgebläse 22 bilden eine Reinigungseinrichtung zum Entfernen der Nichtkornbestandteile aus dem Erntegutstrom. Das Reinigungsgebläse 22 ist vor der Siebanordnung 11 platziert, um einen entgegen der Fahrtrichtung gerichteten Luftstrom zu liefern, der teils durch die Siebe 15, 16 hindurch, teils über sie hinwegstreicht, um leichte Bestandteile des auf den Sieben 15, 16 befindlichen Ernteguts anzuheben und fortzutragen. Diese Bestandteile gelangen zu einem Auswurfgebläse 23 am Heck der Karosserie des Mähdreschers und werden von diesem auf der soeben abgeernteten Feldfläche verteilt.

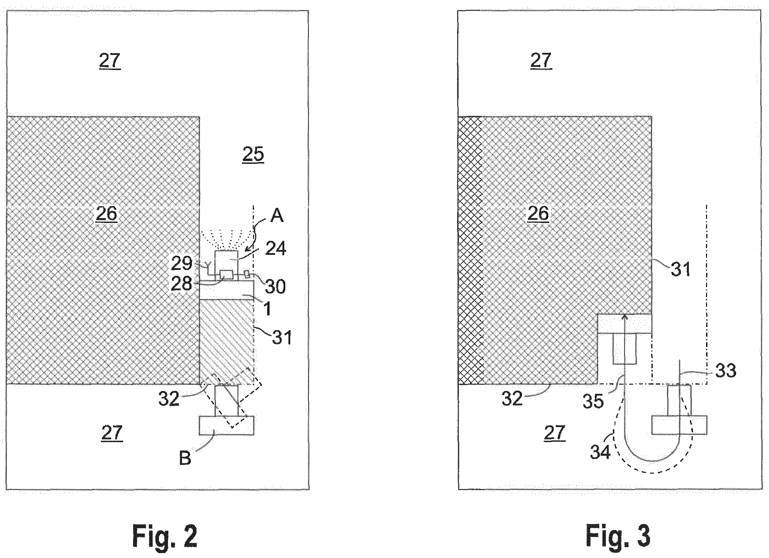

Fig. 2 zeigt eine stark schematisierte Draufsicht auf den Mähdrescher mit Schneidwerk 1 und Karosserie 24, der sich auf einem abzuerntenden Feld bewegt. Die bereits abgeerntete Fläche des Feldes ist mit 25, der noch verbleibende Bestand des Ernteguts 2 ist mit 26 bezeichnet. In einer Anfangsphase des Erntevorgangs, der in dem in Fig. 2 dargestellten Stadium bereits abgeschlossen ist, ist an zwei gegenüberliegenden Enden des Feldes jeweils ein Vorgewende 27 freigeschnitten worden, um dem Mähdrescher, wenn der restliche Bestand 26 anschließend durch Hin- und Herfahren des Mähdreschers zwischen den Vorgewenden 27 abgeerntet wird, diesem ein Wenden zu ermöglichen, ohne dass er dafür das Feld verlassen muss.

Jedes Vorgewende 27 ist flächendeckend mit einer Strohschicht bestreut, die beim Abernten des Vorgewendes erhalten wurde.

Eine Steuereinheit 28 des Mähdreschers ist mit einem Satellitennavigationsempfänger 29, typischerweise einem GPS-Empfänger, und einer auf eine Ecke des Schneidwerks 1 ausgerichteten Kamera 30 verbunden, um den Mähdrescher an einer Längskante 31 des Bestands 26 entlang zu navigieren.

In einem Speicher der Steuereinheit 28 ist die Form des abzuerntenden Feldes hinterlegt; bevor mit dem Abernten des Feldes begonnen wird, entspricht diese Form der des Bestands 26. Der sich während des Aberntens fortlaufend verändernde Kantenverlauf des Bestands 26 wird mit Hilfe des Satellitennavigationsempfänger 29 und der Kamera 30 erfasst und in dem Speicher fortlaufend aktualisiert, so dass die Steuereinheit 28 beim Fahren entlang der Längskante 31 jederzeit in der Lage ist, die Entfernung zum Vorgewende 27 anzugeben.

Die Steuereinheit 28 ist mit weiteren Sensoren, zum Beispiel einem Schichtdickensensor zur Erfassung des Erntegutdurchsatzes durch den Mähdrescher, einem Erntegutfeuchtesensor, einem akustischen Sensor 34 (s. Fig. 1) zum Erfassen des Kornanteils in dem die Hinterkante der Abscheideeinrichtung 13 passierenden Erntegut, etc., verbunden, um Parameter der Erntegutverarbeitung wie etwa die Geschwindigkeit des Schrägförderers 6, der Dreschtrommel 8 oder der Abscheideeinrichtung 13 nach vorgegebenen Kriterien zu optimieren, insbesondere um mit möglichst geringen Betriebskosten, also auch in kurzer Zeit, eine Ernte von möglichst hohem Verkaufswert einzubringen, wobei der Verkaufswert sowohl durch die Menge als auch durch die Reinheit des geernteten Korns bestimmt sein kann.

Folge dieser Optimierung ist, dass die die Durchlaufgeschwindigkeit v_{D} des Strohs durch den Mähdrescher, das heißt der Abstand zwischen der Vorderkante der Bodenplatte 3 und dem Auswurfgebläse 23, dividiert durch die mittlere Verweildauer des Strohs im Mähdrescher, im Allgemeinen von dessen Fahrgeschwindigkeit v_{F} abweicht. Folge dieser Abweichung ist, dass die Fahrstrecke, die der Mähdrescher während dieser Verweildauer zurücklegt, von dem Abstand zwischen Schneidwerk 1 und Auswurfgebläse 22 verschieden ist und deshalb Stroh nicht exakt auf die gleiche Stelle wieder ausgestreut wird, von der es geerntet wurde.

Wenn der Mähdrescher sich von der in Fig. 2 mit A bezeichneten Position weiterbewegt und nach Abernten des diagonal schraffierten Teils des Bestandes 26 das Schneidwerk 1 eine quer zur Fahrtrichtung orientierte Kante 32 des Bestands überquert, endet die Zufuhr von Erntegut zum Schneidwerk 1. Wenn die Durchlaufgeschwindigkeit v_{D} des Ernteguts kleiner ist als die Fahrgeschwindigkeit v_{F}, dann enthält der Mähdrescher auch dann noch Stroh, wenn sein Auswurfgebläse 23 die Kante 32 kreuzt und er die in Fig. 2 mit B bezeichnete Stellung im Vorgewende 27 erreicht. Das zu diesem Zeitpunkt noch enthaltene restliche Stroh wird dann im Vorgewende 27 auf die dort bereits befindliche Strohschicht ausgestreut und verstärkt diese in unerwünschter Weise.

Ist hingegen die Durchlaufgeschwindigkeit v_{D} größer als die Fahrgeschwindigkeit v_{F}, dann ist bereits alles Stroh aus dem Mähdrescher ausgeworfen, bevor das Auswurfgebläse 23 die Kante 32 überquert, sodass vor der Kante 32 eine Fläche unbestreut bleibt.

Umgekehrte Verhältnisse ergeben sich, wenn der Mähdrescher, wie in Fig. 3 dargestellt, nach dem Wenden im Vorgewende 27 die Kante 32 erneut überquert, um in den Bestand 26 einzufahren. Wenn v_{D} < v_{F}, dann kann der Mähdrescher im Bestand mehr als seine eigene Länge zurücklegen, bevor wieder Stroh das Auswurfgebläse 23 erreicht, und eine an die Kante 32 angrenzende Fläche bleibt unbestreut. Ist hingegen v_{D} > v_{F}, dann tritt bereits Stroh am Auswurfgebläse 23 aus, bevor das Heck des Mähdreschers das Vorgewende 27 verlassen hat, und es wird wiederum ein Teil des Vorgewendes doppelt bestreut.

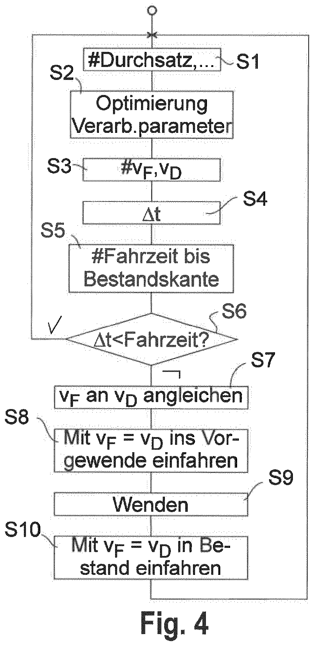

Um eine möglichst homogene Verteilung des ausgestreuten Strohs zu gewährleisten, führt die Steuereinheit 28 das im Flussdiagramm der Fig. 4 dargestellte Arbeitsverfahren aus. Es wird angenommen, dass zu Beginn des Verfahrens der Mähdrescher sich im Bestand bewegt und sich z.B. an der in Fig. 2 mit A bezeichneten Position befindet. In Schritt S1 werden der Erntegutdurchsatz durch den Mähdrescher sowie andere das Dreschergebnis beeinflussende Parameter, insbesondere die Feuchte des Ernteguts, gemessen, und in Abhängigkeit von diesen Parametern wählt die Steuereinheit in Schritt S2 Verarbeitungsparameter wie etwa die Geschwindigkeit des Schrägförderers 6, der Dreschtrommel 8, die Breite eines Dreschspalts zwischen Dreschtrommel 8 und Dreschkorb 9, die Amplitude des Strohschüttlers der Abscheideeinrichtung 13, oder die Drehzahl des Reinigungsgebläses 22 nach einer ersten vorgegebenen Vorschrift, um in kurzer Zeit eine hohe Ausbeute an Korn guter Reinheit zu erzielen. Zu einem der in Schritt S2 zu optimierenden Parameter gehört auch die Fahrgeschwindigkeit v_{F} des Mähdreschers, da sie ausschlaggebend ist für den Erntegutdurchsatz im Mähdrescher.

In Schritt S3 werden die Fahrgeschwindigkeit v_{F} und die Durchlaufgeschwindigkeit v_{D} ermittelt. Als Fahrgeschwindigkeit v_{F} kann ein in Schritt S2 festgelegter Sollwert herangezogen werden, oder es kann ein Istwert durch ein Tachometer gemessen werden. Die Durchlaufgeschwindigkeit v_{D} wird anhand von empirisch ermittelten, in einem Speicher der Steuereinheit 28 abgelegten Kennlinien in Abhängigkeit insbesondere von den oben in Verbindung mit Schritt S2 erwähnten Geschwindigkeiten ermittelt.

Anhand der Vorgabe, dass eine maximale Beschleunigung a des Mähdreschers nicht überschritten werden soll, kann in Schritt S4 eine Zeit Δt abgeschätzt werden, die benötigt würde, um die Fahrgeschwindigkeit v_{F} an die Durchlaufgeschwindigkeit v_{D} anzugleichen.

In Schritt S5 wird anhand der mittels des Satellitennavigationsempfängers 29 ermittelten aktuellen Position des Mähdreschers und des zuvor ermittelten aktuellen Verlaufs der Kante 31, 32 des Bestandes 26 die Zeit abgeschätzt, die bis zum Erreichen der Kante 32 verbleibt. Diese Berechnung kann unter der Annahme einer gleichbleibenden Fahrtgeschwindigkeit v_{F} des Mähdreschers erfolgen; vorzugsweise wird eine ausgehend von der aktuellen Fahrtgeschwindigkeit v_{F} mit der Beschleunigung a gleichmäßig verzögerte Bewegung angenommen. Solange in Schritt S6 festgestellt wird, dass Δt kleiner als die Restfahrzeit bis zur vorausliegenden Bestandskante 32 ist, kehrt das Verfahren zu Schritt S1 zurück, und die Verarbeitungsparameter werden kontinuierlich nach der oben erwähnten ersten Vorschrift im Hinblick auf hohen wirtschaftlichen Ertrag gesteuert.

Wenn sich hingegen in Schritt S6 ergibt, dass die Restfahrzeit Δt größer oder gleich der Restfahrzeit bis zur Bestandskante 32 ist, dann wird die Optimierung der Verarbeitungsparameter nach der ersten Vorschrift ausgesetzt. Stattdessen beginnt die Steuereinheit in Schritt S7, die Fahrgeschwindigkeit v_{F} an die Durchlaufgeschwindigkeit v_{D} anzugleichen, typischerweise durch gleichmäßiges Verzögern mit der Beschleunigung a. Andere Verarbeitungsparameter, insbesondere solche, die die Durchlaufgeschwindigkeit v_{D} beeinflussen, werden auf ihren aktuellen Werten eingefroren. Wenn zuvor die Berechnung der Fahrzeit in Schritt S5 auch unter der Annahme einer gleichmäßig mit a verzögerten Bewegung erfolgt ist, dann wird v_{F} genau dann gleich v_{D}, wenn die Bestandskante 32 erreicht ist.

Wenn die Bestandskante 32 mit v_{F} = v_{D} überfahren wird, dann wird der Strohanteil des unmittelbar vor Passieren der Bestandskante 32 aufgenommenen Ernteguts genau an der Stelle wieder ausgeworfen, an der es aufgenommen wurde, und eine Verfrachtung von Stroh von einer Seite der Bestandskante 32 auf die andere wird vermieden.

Da der Vorrat an Stroh im Mähdrescher sich in dem Moment erschöpft, in dem das Auswurfgebläse 23 die Kante 32 überquert, bleiben Bewegungen, die der Mähdrescher während eines Wendemanövers S9 im Vorgewende 27 ausführt, ohne Einfluss auf die Verteilung des Strohs. Der Mähdrescher kann daher z.B. auf eine Fahrgeschwindigkeit unterhalb v_{D} verzögert werden, um eine sehr enge Wende fahren zu können; wenn nötig, kann aber auch mit beliebigen Geschwindigkeiten vor- und zurückrangiert werden.

Nachdem das im Mähdrescher enthaltene Stroh komplett ausgeworfen ist und sich kein zu verarbeitendes Erntegut mehr im Mähdrescher befindet, können die zuvor eingefrorenen Verarbeitungsparameter verändert werden, insbesondere können im Fall eines längeren Aufenthalts des Mähdreschers außerhalb des Bestands 26 Verarbeitungsorgane wie Dreschtrommel 8, Abscheideeinrichtung 13 etc. angehalten werden. In einem solchen Fall werden die zum Zeitpunkt des Verlassens des Bestands 26 eingestellten Werte der Verarbeitungsparameter von der Steuereinheit 28 zwischengespeichert.

Sofern die zum Zeitpunkt des Verlassens des Bestands 26 eingestellten Werte der Verarbeitungsparameter nicht während des Aufenthalts außerhalb des Bestandes 26 unverändert geblieben sind, werden sie wieder eingestellt, bevor der Mähdrescher wie in Fig. 3 dargestellt über die Kante 32 erneut in den Bestand 26 einfährt.

Für dieses Einfahren in den Bestand 26 wird die Fahrgeschwindigkeit v_{F} wieder der Durchlaufgeschwindigkeit v_{D} gleich gemacht (Schritt S10), um sicherzustellen, dass der Mähdrescher zu genau dem Zeitpunkt, an dem auch das Auswurfgebläse 23 die Kante 32 wieder passiert hat, der Mähdrescher mit dem Auswerfen vom Stroh beginnt und dieses somit auf die neu abgeerntete Fläche, nicht aber auf das Vorgewende 27 fällt.

Fig. 2 zeigt als gestrichelten Umriss einen Mähdrescher, der unmittelbar zu dem Zeitpunkt, an dem die Vorderkante seines Schneidwerks 1 über die Kante 32 ins Vorgewende 27 eindringt, zu wenden beginnt. Da die gelenkten Räder des Mähdreschers die Hinterräder sind, hat ein solches Lenkmanöver zur Folge, dass das Heck des Mähdreschers mit dem Auswurfgebläse 23 seitwärts auf eine bereits abgeerntete und mit Stroh bestreute Fläche ausweicht und diese erneut bestreut. Um eine solche Doppelbestreuung auszuschließen, ist einer Ausgestaltung der Erfindung zufolge die Steuereinheit 28 programmiert, um (auf einem in Fig. 3 mit 33 bezeichneten Wegabschnitt) einen zu der Längskante 31 parallelen Kurs des Mähdreschers solange beizubehalten, bis dieser sich zur Gänze im Vorgewende 27 befindet. Da das Auswurfgebläse 22 zu diesem Zeitpunkt kein Stroh mehr abgibt, bleibt eine bei einem sich anschließenden Wenden auftretende Seitwärtsbewegung des Mähdrescherhecks entlang der in Fig. gestrichelt eingezeichneten Bahn 34 nun ohne Folgen für die Strohverteilung.

Aus demselben Grund bewegt sich der Mähdrescher auch beim Wiedereinfahren in den Bestand 26, wie in Fig. 3 gezeigt, solange auf einem geradlinigen Wegabschnitt 35, wie er die Kante 32 kreuzt.

### Bezugszeichenliste

- 1: Schneidwerk
- 2: Erntegut
- 3: Bodenplatte
- 4: Messer
- 5: Rotor
- 6: Schrägförderer
- 7: Dreschwerk
- 8: Dreschtrommel
- 9: Dreschkorb
- 10: Vorbereitungsboden
- 11: Siebanordnung
- 12: Wendetrommel
- 13: Abscheideeinrichtung
- 14: Rücklaufboden
- 15: Obersieb
- 16: Untersieb
- 17: Boden
- 18: Schneckenmulde
- 19: Förderschnecke
- 20: Kornelevator
- 21: Korntank
- 22: Reinigungsgebläse
- 23: Auswurfgebläse
- 24: Karosserie
- 25: abgeerntete Fläche
- 26: Bestand
- 27: Vorgewende
- 28: Steuereinheit
- 29: Satellitennavigationsempfänger
- 30: Kamera
- 31: Längskante
- 32: Kante
- 33: Wegabschnitt
- 34: Bahn
- 35: Wegabschnitt

## Patentansprüche

1. Selbstfahrende, wenigstens einen Teil von aufgenommenem Erntegut nach Verarbeitung wieder auswerfende Erntemaschine, insbesondere wenigstens teilweise autonom navigierende Erntemaschine, mit einer anhand von Sensordaten wenigstens die Fahrgeschwindigkeit (v_{F}) der Erntemaschine steuernden Steuereinheit (28), **dadurch gekennzeichnet, dass** die Steuereinheit (28) an ein Instrument (29, 30) zum Erkennen einer Bestandskante (31, 32) gekoppelt und eingerichtet ist, beim Passieren einer Bestandskante (32) in wenigstens einer Richtung die Fahrgeschwindigkeit (v_{F}) der Erntemaschine zum Zeitpunkt des Passierens der Bestandskante (32) an eine Durchlaufgeschwindigkeit (v_{D}) von Erntegut durch die Erntemaschine anzupassen.

2. Erntemaschine nach Anspruch 1, **dadurch gekennzeichnet, dass** die Durchlaufgeschwindigkeit (v_{D}) gegeben ist durch den Abstand in Fahrtrichtung zwischen einer Erntegut aufnehmenden Schneidkante eines Schneidwerks (1) und einer Auswurföffnung (23) der Erntemaschine, dividiert durch die mittlere Verweildauer des auszuwerfenden Erntegutes in der Erntemaschine.

3. Erntemaschine nach einem der vorhergehenden Ansprüche, **dadurch gekennzeichnet, dass** die Steuereinheit (28) eingerichtet ist, die Durchlaufgeschwindigkeit (v_{D}) anhand der Geschwindigkeit wenigstens eines das Erntegut verarbeitenden Arbeitsorgans (8, 13, 22) der Erntemaschine abzuschätzen.

4. Erntemaschine nach Anspruch 3, **dadurch gekennzeichnet, dass** die Steuereinheit (28) eingerichtet ist, beim Fahren im Bestand (26) die Geschwindigkeit des Arbeitsorgans (8, 13, 22) anhand von Merkmalen des Bestandes (26) wie insbesondere Art des Ernteguts, Bestandsdichte und Feuchtigkeitsgehalt zu regeln.

5. Erntemaschine nach einem der vorhergehenden Ansprüche, **dadurch gekennzeichnet, dass** die Steuereinheit (28) eingerichtet ist, beim Fahren im Bestand die Fahrgeschwindigkeit (v_{F}) der Erntemaschine anhand von Merkmalen des Bestandes (26) wie insbesondere Art des Ernteguts, Bestandsdichte und Feuchtigkeitsgehalt zu regeln.

6. Erntemaschine nach einem der vorhergehenden Ansprüche, **dadurch gekennzeichnet, dass** die Steuereinheit (28) eingerichtet ist, eine Differenz zwischen der Fahrgeschwindigkeit und der Durchlaufgeschwindigkeit zu erfassen (S3, S4) und vor Erreichen der Bestandskante (32) allmählich zu reduzieren (S7).

7. Erntemaschine nach einem der vorhergehenden Ansprüche, **dadurch gekennzeichnet, dass** die Steuereinheit (28) eingerichtet ist, beim Wiedereinfahren in den Bestand (26) die beim vorherigen Herausfahren aus dem Bestand (26) innegehabte Geschwindigkeit (v_{F}) wiedereinzustellen.

8. Erntemaschine nach einem der vorhergehenden Ansprüche, **dadurch gekennzeichnet, dass** das Instrument einen Empfänger (29) für ein Satellitennavigationssignal umfasst.

9. Erntemaschine nach einem der vorhergehenden Ansprüche, **dadurch gekennzeichnet, dass** das Instrument eine gespeicherte Karte des Bestands (26) umfasst, die während des Erntens des Bestands aktualisierbar ist.

10. Verfahren zum Betreiben einer selbstfahrenden, wenigstens einen Teil von aufgenommenem Erntegut nach Verarbeitung wieder auswerfenden Erntemaschine mit den Schritten:
a) Abschätzen (S3) einer Durchlaufgeschwindigkeit (v_{D}) von Erntegut durch die Erntemaschine,
b) beim Passieren einer Bestandskante (32) in wenigstens einer Richtung Anpassen (S7) der Fahrgeschwindigkeit (v_{F}) der Erntemaschine zum Zeitpunkt des Passierens der Bestandskante (32) an die Durchlaufgeschwindigkeit (v_{D}).

11. Verfahren nach Anspruch 10, **dadurch gekennzeichnet, dass** die Fahrgeschwindigkeit der Erntemaschine vor dem Passieren der Bestandskante herauf- und nach dem Passieren herabgesetzt wird.

## Claims

1. A self-propelled, in particular at least partially autonomously navigating, harvesting machine which discharges at least a portion of harvested crop which has been picked up following processing, having a control unit (28) which controls at least the drive speed (v_{F}) of the harvesting machine with the aid of sensor data, **characterized in that** the control unit (28) is coupled to an instrument (29, 30) for identifying a field crop edge (31, 32) and is configured so that upon passing a field crop edge (32) in at least one direction, the drive speed (v_{F}) of the harvesting machine is adapted to the throughput speed (v_{D}) of harvested crop through the harvesting machine at the moment of passing the field crop edge (32).

2. The harvesting machine according to claim 1, **characterized in that** the throughput speed (v_{D}) is given by the distance in the direction of travel between a cutting edge of a cutting assembly (1) picking up harvested crop and a discharge opening (23) of the harvesting machine divided by the mean residence time of the discharged harvested crop in the harvesting machine.

3. The harvesting machine according to one of the preceding claims, **characterized in that** the control unit (28) is configured to estimate the throughput speed (v_{D}) with the aid of the speed of at least one of the working units (8, 13, 22) of the harvesting machine which processes the harvested crop.

4. The harvesting machine according to claim 3, **characterized in that** the control unit (28) is configured such that when driving in field crop (26), the speed of the working unit (8, 13, 22) is regulated as a function of features of the field crop (26), in particular such as the type of harvested crop, field crop density and moisture content.

5. The harvesting machine according to one of the preceding claims, **characterized in that** the control unit (28) is configured such that when driving in the field crop, the drive speed (v_{F}) of the harvesting machine is regulated as a function of features of the field crop (26) in particular such as the type of harvested crop, field crop density and moisture content.

6. The harvesting machine according to one of the preceding claims, **characterized in that** the control unit (28) is configured to identify a difference between the drive speed and the throughput speed (S3, S4) and to reduce it gradually before reaching the edge of the field crop (32).

7. The harvesting machine according to one of the preceding claims, **characterized in that** the control unit (28) is configured such that the speed (v_{F}) maintained upon driving out of the field crop (26) is re-established when re-entering the field crop (26).

8. The harvesting machine according to one of the preceding claims, **characterized in that** the instrument comprises a receiver (29) for a satellite navigation signal.

9. The harvesting machine according to one of the preceding claims, **characterized in that** the instrument comprises a stored map of the field crop (26) which can be updated during harvesting of the field crop.

10. A method for operating a self-propelled harvesting machine which discharges at least a portion of harvested crop which has been picked up following processing, having the steps of:
a) estimating (S3) a throughput speed (v_{D}) for harvested crop through the harvesting machine,
b) upon passing a field crop edge (32) in at least one direction, adapting (S7) the drive speed (v_{F}) of the harvesting machine at the time at which the field crop edge (32) is passed to the throughput speed (v_{D}).

11. The method according to claim 10, **characterized in that** the drive speed of the harvesting machine is increased prior to passing the field crop edge and reduced after passing it.

## Revendications

1. Moissonneuse automotrice, éjectant au moins une partie de la récolte ramassée, après traitement de celle-ci, en particulier moissonneuse naviguant au moins en partie de façon autonome, comprenant une unité de commande (28) qui contrôle au moins la vitesse d'avancement (v_{F}) de la moissonneuse à l'aide de données de capteurs, **caractérisée en ce que** l'unité de commande (28) est couplée à un instrument (29, 30) destiné à détecter une limite de culture (31, 32) et est conçue pour adapter, lors du passage d'une limite de culture (32) dans au moins une direction, la vitesse d'avancement (v_{F}) de la moissonneuse au moment du passage de la limite de culture (32) à une vitesse de passage (v_{D}) de la récolte dans la moissonneuse.

2. Moissonneuse selon la revendication 1, **caractérisée en ce que** la vitesse de passage (v_{D}) est déterminée par la distance, dans la direction d'avancement, entre une arête de coupe, ramassant les végétaux à récolter, d'une barre de coupe (1) et une ouverture d'éjection (23) de la moissonneuse, divisée par le temps de séjour moyen de la récolte à éjecter, dans la moissonneuse.

3. Moissonneuse selon l'une des revendications précédentes, **caractérisée en ce que** l'unité de commande (28) est conçue pour évaluer la vitesse de passage (v_{D}) à l'aide de la vitesse d'au moins un des organes de travail (8, 13, 22) de la moissonneuse traitant la récolte.

4. Moissonneuse selon la revendication 3, **caractérisée en ce que** l'unité de commande (28) est conçue pour réguler, lors du déplacement dans la culture (26), la vitesse de l'organe de travail (8, 13, 22) à l'aide de caractéristiques de la culture (26), en particulier la nature des végétaux à récolter, la densité de la culture et la teneur en humidité.

5. Moissonneuse selon l'une des revendications précédentes, **caractérisée en ce que** l'unité de commande (28) est conçue pour réguler, lors du déplacement dans la culture, la vitesse d'avancement (v_{F}) de la moissonneuse à l'aide de caractéristiques de la culture (26), en particulier la nature des végétaux à récolter, la densité de la culture et la teneur en humidité.

6. Moissonneuse selon l'une des revendications précédentes, **caractérisée en ce que** l'unité de commande (28) est conçue pour détecter (S3, S4) une différence entre la vitesse d'avancement et la vitesse de passage et pour la réduire (S7) progressivement avant d'atteindre la limite de culture (32).

7. Moissonneuse selon l'une des revendications précédentes, **caractérisée en ce que** l'unité de commande (28) est conçue pour régler de nouveau, lors du retour dans la culture (26), la vitesse (v_{F}) adoptée au moment de la sortie précédente de la culture (26).

8. Moissonneuse selon l'une des revendications précédentes, **caractérisée en ce que** l'instrument comprend un récepteur (29) pour un signal de navigation par satellite.

9. Moissonneuse selon l'une des revendications précédentes, **caractérisée en ce que** l'instrument comprend une carte enregistrée de la culture (26) qui peut être remise à jour pendant la récolte des végétaux.

10. Procédé de fonctionnement d'une moissonneuse automotrice, éjectant au moins une partie de la récolte ramassée, après traitement de celle-ci, comprenant les étapes suivantes :
a) évaluation (S3) d'une vitesse de passage (v_{D}) de la récolte ramassée, à travers la moissonneuse,
b) lors du passage d'une limite de culture (32) dans au moins une direction, adaptation (S7) de la vitesse d'avancement (v_{F}) de la moissonneuse à la vitesse de passage (v_{D}), au moment du passage de la limite de culture (32).

11. Procédé selon la revendication 10, **caractérisé en ce que** la vitesse d'avancement de la moissonneuse est augmentée avant le passage de la limite de culture et est réduite après le passage.
